# EUROPÄISCHE PATENTANMELDUNG

(11) **EP 2 578 839 A1**
(43) Veröffentlichungstag der Anmeldung: **10.04.2013**
(21) Anmeldenummer: 11184063.3
(22) Anmeldetag: 06.10.2011
(51) Int. Cl.: F02C 3/34, F02C 9/20

(54) **Verfahren zum Betrieb eines Gasturbinenkraftwerks mit Abgasrezirkulation und entsprechendes Gasturbinenkraftwerk**

(71) Anmelder: Alstom Technology Ltd, 5400 Baden (CH)
(72) Erfinder: Sander, Frank, 5415 Rieden (CH); Rofka, Stefan, 5415 Nussbaumen (CH); Benz, Eribert, 5413 Birmenstorf (CH)

(57) **Zusammenfassung**

Die Erfindung betrifft ein Verfahren zum Betrieb eines Gasturbinenkraftwerkes mit Abgasrezirkulation, bei welchem die verstellbaren Verdichterleitschaufeln (33) in Abhängigkeit von dem Abgasrezirkulationsverhältnis und/oder einem für die Abgasrezirkulation indikativen Prozessparameter geregelt werden.

Weiter betrifft die Erfindung ein Gasturbinenkraftwerk mit Abgasrezirkulation und einem Regler, der so konfiguriert ist, dass eine Soll- Position der verstellbaren Verdichterleitschaufeln (33) in Abhängigkeit von der Stellung eines Regelelements (29, 36) zur Regelung des Abgasrezirkulationsstroms geregelt wird.

## Beschreibung

### TECHNISCHES GEBIET

Die vorliegende Erfindung betrifft ein Verfahren zum Betrieb eines Gasturbinenkraftwerks mit Abgasrezirkulation sowie ein Gasturbinenkraftwerk zur Durchführung des Verfahrens.

### STAND DER TECHNIK

Die Rezirkulation von Abgasen ist eine Technologie, welche grundsätzlich für unterschiedlichste Zwecke bei Gasturbinen eingesetzt werden kann. So wird Abgasrezirkulation beispielsweise für die Reduktion der NOx-Emissionen (Stickstoffoxid-Emissionen die bei der Verbrennung entstehen) oder zu einer Reduktion des abzuleitenden Abgasstroms vorgeschlagen. Bei der Rezirkulation von Abgasen bei einer Gasturbine wird ein wesentlicher Anteil des Abgases aus dem gesamten Abgasstrom abgezweigt und typischerweise nach Kühlung und Reinigung dem Eingangsmassenstrom der Gasturbine respektive dem Kompressor zugeführt, wobei der rückgeführte Abgasstrom mit frischer Luft vermischt wird, und diese Mischung anschliessend dem Kompressor zugeführt wird.

Vorteilhaft kann durch Abgasrezirkulation der Kohlendioxid-Partialdruck in den Abgasen erhöht werden, um die Kohlendioxidkonzentration in den Abgasen zu erhöhen und damit die Leistungsverluste und Wirkungsgradverluste von Kraftwerken mit Kohlendioxid-Abscheidung zu reduzieren. Weiter ist Abgasrezirkulation mit dem Ziel vorgeschlagen worden, die Sauerstoffkonzentration in den Ansauggasen von Gasturbinen zu reduzieren, um dadurch die NOx-Emissionen zu reduzieren.

Zur Abgasrezirkulation beschreibt beispielsweise die US 7536252 B1 ein Verfahren zum Steuern eines Abgasrezirkulationsstroms einer Turbomaschine, der über ein Abgasrezirkulationssystem zu dem Eintritt der Turbomaschine zurückgeführt wird. In diesem Verfahren wird ein Soll- Abgasrezirkulationsverhältnis bestimmt, wobei der Abgasrezirkulationsverhältnis als Verhältnis des zurückgeführten Abgasstroms zu dem Eintrittsstrom der Turbomaschine definiert ist, und der Ist-Wert auf den Soll- Wert geregelt wird.

Durch Einschalten eine Abgasrezirkulation bzw. Veränderung des Abgasrezirkulationsstroms ändern sich die Randbedingungen für den Betrieb der Gasturbine, so dass das Kraftwerk sie bei der Verwendung eines herkömmlichen Betriebskonzeptes, wie es beispielsweise aus der EP0718470 bekannt ist, nicht mehr das erwartete Verhalten zeigt, bzw. nicht mehr die erwarteten Leistungs- und Wirkungsgradziele erreicht.

### DARSTELLUNG DER ERFINDUNG

Ein Aspekt der vorliegenden Offenbarung ist es, ein Verfahren zum zuverlässigen Betrieb eines Gasturbinenkraftwerkes anzugeben, bei dem der Einfluss von Abgasrezirkulation auf die Performance, dass heisst die Leistung und/ oder den Wirkungsgrad, zumindest teilweise kompensiert wird.

Ein Gasturbinenkraftwerk mit Abgasrezirkulation umfasst eine Gasturbine, einen Abhitzedampferzeuger und einen Abgasteiler, der die Abgase des Gasturbinenkraftwerkes in einen ersten Abgasstrom zur Rezirkulation in einen Ansaugstrom der Gasturbine und in einen zweiten Abgasstrom zur Abgabe an die Umgebung teilt und einen Abgasrückkühler. Die Gasturbine selbst umfast einen Verdichter mit verstellbaren Verdichterleitschaufeln, eine Brennkammer und eine Turbine. Weiter ist der Abgasteiler als Regelelement zur Regelung des ersten Abgasstroms ausgebildet oder ein Regelelement in einer Rezirkulationsleitung, durch die die rezirkulierten Abgase dem Verdichter der Gasturbine zugeführt werden, vorgesehen. Gemäss einer Ausführung des Verfahren zum Betrieb eines Gasturbinenkraftwerks werden die verstellbaren Verdichterleitschaufeln in Abhängigkeit von dem Abgasrezirkulationsverhältnis (auch Abgasrezirkulationsanteil genannt) und/ oder einem für die Abgasrezirkulation indikativen Prozessparameter des Kraftwerks geregelt. Dabei werden beispielsweise die verstellbaren Verdichterleitschaufeln mit zunehmendem Rezirkulationsverhältnis, d.h. grösser werdendem Verhältnis von rezirkuliertem Abgasstrom zu Gesamtabgasstrom, weiter geöffnet. Als indikativer Prozessparameter ist ein Parameter zu verstehen, aufgrund dessen Wertes bzw. Änderung des Wertes allein oder in Kombination mit anderen Parametern zumindest qualitativ der Rezirkulationsstrom oder das Rezirkulationsverhältnis erkennbar oder ableitbar ist. Typischerweise erlaubt ein indikativer Prozessparameter sogar eine quantitative Ableitung des Rezirkulationsstroms oder des Rezirkulationsverhältnises.

Je nach Ausführung kann die Regelung der verstellbaren Verdichterleitschaufeln in Abhängigkeit von dem Abgasrezirkulationsverhältnis und/ oder einem für die Abgasrezirkulation indikativen Prozessparameter des Kraftwerks in die Logik eines Reglers und des Regelalgorithmus integriert werden. Sie kann auch als Korrektur oder Offset berechnet werden und damit die Sollgrössen, die ein herkömmlicher Gasturbinenregler bestimmt, korrigiert werden.

Nach einer Ausführung des Verfahrens wird die Temperaturdifferenz zwischen Verdichtereintrittstemperatur und Umgebungstemperatur als Parameter, in dessen Abhängigkeit die verstellbare Verdichterleitschaufel geregelt wird, genutzt. Die Verdichtereintrittstemperatur steigt typischerweise mit dem Rezirkulationsverhältnis, da die rezirkulierten Abgase nicht bis auf Umgebungstemperatur gekühlt werden. Insbesondere bei Luft- Luftkühlern, die Umgebungsluft als Wärmesenke nutzen, bleiben die rezirkulierten Abgase wärmer als die Umgebungsluft.

Zur Optimierung des Kraftwerksprozesses und je nach Verfügbarkeit von Wärmesenken wird die Rückkühltemperatur, auf die die rezirkulierten Abgase im Abgasrückkühler gekühlt werden, geregelt. Einerseits kann diese Rückkühltemperatur auch unter der Umgebungstemperatur liegen, wenn zum Beispiel Kühlwasser verfügbar ist. Andererseits kann die Rückkühltemperatur deutlich über der Umgebungstemperatur liegen und über die Temperatur, die mit Luft- Luftkühlern erreichbar ist, angehoben werden, um zum Beispiel bei Teillastbetrieb den Wirkungsgrad des Gesamtkraftwerks zu erhöhen. Mit der Rückkühltemperatur ändert sich der Einfluss der rezirkulierten Abgase auf den Kraftwerksprozess, weshalb in einer Ausführung des Verfahren die verstellbaren Verdichterleitschaufeln in Abhängigkeit von der Rückkühltemperatur des Abgasrückkühlers geregelt werden können.

Da die Ermittlung des Rezirkulationsverhältnisses praktisch aufgrund der grossen, schwierig bestimmbaren Volumenströme aufwendig und oft ungenau ist, werden nach einer Ausgestaltung des Verfahrens die verstellbaren Verdichterleitschaufeln in Abhängigkeit von der Stellung des Regelelements geregelt, mit dem der erste Abgasteilstroms zur Rezirkulation geregelt wird. Alternativ kann eine Korrektur der Sollposition der verstellbaren Verdichtervorleitschaufeln im Regler in Abhängigkeit von der Sollposition des Regelelementes ermittelt werden.

Gemäss einer weiteren Ausführungsform werden die verstellbaren Verdichterleitschaufeln proportional zum Abgasrezirkulationsverhältnis und/ oder einem für die Abgasrezirkulation indikativen Prozessparameter geöffnet.

Nach einer weiteren Ausführung des Verfahren wird die Volllastposition der verstellbaren Verdichterleitschaufel bis zu der die verstellbaren Verdichterleitschaufeln geöffnet werden können in Abhängigkeit von dem Abgasrezirkulationsverhältnis und/ oder einem für die Abgasrezirkulation indikativen Prozessparameter geregelt.

Durch die Regelung der verstellbaren Verdichterleitschaufel abhängig von dem Abgasrezirkulationsverhältnis und/oder einem für die Abgasrezirkulation indikativen Prozessparameter ergibt sich gegenüber einem herkömmlichen Fahrkonzept eine Korrektur oder ein Offset in der Leitreihenposition. Durch diese Korrektur, die ein Öffnen der verstellbaren Verdichterleitschaufelreihen beinhaltet, wird der Ansaugvolumenstrom des Verdichters erhöht. Damit wird die Leistung der Gasturbine erhöht, wodurch der Einfluss der Abgasrezirkulation auf das Kraftwerk kompensiert werden kann. Ferner ist die Leistung des Abwärmekessels und des angeschlossenen Wärmedampfkreislaufes proportional zur Abgasmenge. Gleichzeitig ist nimmt mit dem Volumenstrom das Druckverhältnis der Gasturbine zu. Dies wirkt sich primär auf den Wirkungsgrad der Gasturbine positiv aus, führt aber bei konstanter Heissgastemperatur zu einer Absenkung der Abgastemperatur der Gasturbine.

Aufgrund von Designlimiten, wie der Pumpgrenze des Verdichters, den zulässigen

Verdichteraustrittstemperaturen, oder einer Verschiebung der Verdichterentnahmedrücke für die Kühlluftentnahme können die verstellbaren Verdichterleitschaufeln nicht beliebig geöffnet werden. Nach einer Ausführung des Verfahrens werden die verstellbare Verdichterleitschaufel in Abhängigkeit von dem Abgasrezirkulationsverhältnis und/ oder einem für die Abgasrezirkulation indikativen Prozessparameter daher geöffnet bis, ein Limitwert erreicht ist. Die Korrektur wird auch bei weiterer Erhöhung des Abgasrezirkulationsverhältnis unabhängig von diesem konstant gehalten.

Gemäss einer Ausführung des Verfahrens werden die verstellbaren Verdichterleitschaufeln bei Änderungen des Abgasrezirkulationsverhältnises so geöffnet, dass die Abgastemperatur konstant bleibt. Nach einer weiteren Ausführung des Verfahrens werden die verstellbaren Verdichterleitschaufeln bei Änderungen des Abgasrezirkulationsverhältnis so geöffnet, dass die Abgastemperatur konstant gehalten wird, bis ein Limitwert erreicht ist. Die Stellung der verstellbaren Verdichterleitschaufeln wird auch bei weiterer Erhöhung des Abgasrezirkulationsverhältnis unabhängig von diesem konstant gehalten.

Nach einer weiteren Ausführung des Verfahrens ist der Limitwert der Öffnung der verstellbaren Verdichterleitschaufeln von der Betriebsfrequenz und/oder der aerodynamischen Drehzahl des Verdichters abhängig.

Die Verfahren lassen sich gleichermassen für Gasturbinen mit einer Brennkammer, wie für Gasturbinen mit sogenannter sequentieller Verbrennung, d.h. Gasturbinen mit einer ersten Brennkammer, einer Hochdruckturbine, einer zweiten Brennkammer und einer Niederdruckturbine durchführen.

In einer weiteren Ausführung des Verfahrens für Gasturbinen mit sequentieller Verbrennung und Abgasrezirkulation wird beim Start der Gasturbine zunächst die erste Brennkammer mit Brennstoff versorgt und gezündet, dann die zweite Brennkammer mit Brennstoff versorgt und gezündet und die Abgasrezirkulation erst nach dem Zuschalten der zweiten Brennkammer initiiert. Entsprechend wird auch die Position der verstellbaren Verdichterleitschaufeln erst nach dem Zuschalten der zweiten Brennkammer abhängig von der Abgasrezirkulation und/ oder einem für die Abgasrezirkulation indikativen Prozessparameter geregelt. Weiter wird die Abgasrezirkulation vor einem Abschalten der zweiten Brennkammer geschlossen und damit auch die Regelung der verstellbaren Vorleitschaufeln wieder ohne Korrektur, typischerweise rein nach einem Standardbetriebskonzept, durchgeführt.

Gemäss einer weiteren Ausführung des Verfahrens wird das Abgas mit dem Ziel einer Erhöhung der Kohlendioxidkonzentration rezirkuliert. Bei diesem Verfahren wird der zweite Abgasstrom einem Kohlendioxid- Abscheidsystem zugeführt. In dieser wird Kohlendioxid abgeschieden und zur weiteren Verarbeitung oder Lagerung abgeführt. Das resultierende kohlendioxidarme Abgas wird an die Umgebung abgeführt.

Je nach Ausführung des Verfahrens werden die verstellbaren Verdichterleitschaufeln im Teillastbetrieb oder auch im Volllastbetrieb abhängig von der Abgasrezirkulation und/ oder einem für die Abgasrezirkulation indikativen Prozessparameter geregelt. Wird die Regelung der verstellbaren Verdichterleitschaufeln nur im Teillastbetrieb vorgenommen, kann eine Kompensation des Einflusses der Abgasrezirkulation auf den Gasturbinenprozess nicht erfolgen. Eine Regelung bei Volllast erfordert, dass die Gasturbine für ein weiteres Öffnen der verstellbaren Verdichterleitschaufeln ausgelegt ist.

Neben dem Verfahren zur Regelung eines Gasturbinenkraftwerks ist ein Gasturbinenkraftwerk mit Abgasrezirkulation zur Durchführung des Verfahrens Gegenstand der Erfindung. Ein derartiges Gasturbinenkraftwerk umfast eine Gasturbine mit einem Verdichter, verstellbaren Verdichterleitschaufeln, einer Brennkammer, einer Turbine und einem Regler. Weiter umfasst ein derartiges Gasturbinenkraftwerk einen Abhitzedampferzeuger und einen Abgasteiler, der die Abgase in einen ersten Abgasstrom zur Rezirkulation in einen Ansaugstrom der Gasturbine und in einen zweiten Abgasstrom zur Abgabe an die Umgebung teilt, sowie ein Regelelement zur Regelung des ersten Abgasstroms. Dabei ist der Regler so konfiguriert ist, dass eine Soll-Position der verstellbaren Verdichterleitschaufeln in Abhängigkeit von der Stellung des Regelelements geregelt wird.

Weiter können bei einer Reglung in Abhängigkeit von Prozessparametern entsprechende Messwertaufnehmer vorgesehen werden. Insbesondere ist für eine Regelung in Abhängigkeit von der Temperaturdifferenz zwischen Verdichtereintrittstemperatur und Umgebungstemperatur ein Messwertaufnehmer zur Messung der Verdichtereintrittstemperatur und ein Messwertaufnehmer zur Messung der Umgebungstemperatur vorzusehen.

Alle erläuterten Vorteile sind nicht nur in den jeweils angegebenen Kombinationen, sondern auch in anderen Kombinationen oder Alleinstellung verwendbar, ohne den Rahmen der Erfindung zu verlassen. Beispielsweise kann anstelle der Verwendung eines Regelelementes, das ein Schliessen der Rezirkulationsleitung erlaubt, wie eine regelbare Klappe oder ein Ventil, auch ein regelbares Abgasgebläse oder ein Booster als Regelelement vorgesehen werden. Vereinfachend ist allgemein die Regelung der verstellbaren Verdichterleitschaufeln beschrieben worden. Diese steht stellvertretend für Regelung oder Steuerung. Dem Fachmann sind verschiedene Regelstrategien, wie Zweipunktregelung, Regelung mit Proportionalregler, Integral- oder IP- Regler bekannt. Weiter sind dem Fachmann verschiedene Reinigungs- und Aufbereitungsmethoden für die rezirkulierten Abgase, wie z.B. eine Gaswäsche, bekannt, mit denen die rezirkulierten Abgase vor der Einleitung in den Verdichter behandelt werden können.

Abgasstrom ist als Zusammenfassende Bezeichnung für Abgasmassenstrom und Abgasvolumenstrom benutzt. Eine Regelung und die entsprechenden Verfahren sind sowohl für den Abgasmassenstrom auch für den Abgasvolumenstrom durchführbar.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen beispielhaft:
- Fig. 1: eine schematische Darstellung eines Gasturbinenkraftwerks mit Rückführung der Abgase;
- Fig. 2: eine schematische Darstellung eines Gasturbinenkraftwerks mit einer Gasturbine mit sequentieller Verbrennung und Rückführung der Abgase;
- Fig. 3: eine schematische Darstellung eines Gasturbinenkraftwerks mit Rückführung der Abgase und einem Kohlendioxid- Abscheidsystem;
- Fig. 4: schematisch den Offset der Verdichterleitschaufelposition in Abhängigkeit von der Abgasrezirkulationsrate;
- Fig. 5: schematisch den Offset der Verdichterleitschaufelposition in Abhängigkeit von der durch Abgasrezirkulation gegenüber der Umgebungstemperatur erhöhten Verdichtereintrittstemperatur; und
- Fig. 6: schematisch einen Verlauf der Verdichterleitschaufelposition über der relativen Last der Gasturbine für den Betrieb ohne Abgasrezirkulation und für den Betrieb mit zwei verschiedenen Abgasrezirkulationsverhältnissen.

### WEGE ZUR AUSFÜHRUNG DER ERFINDUNG

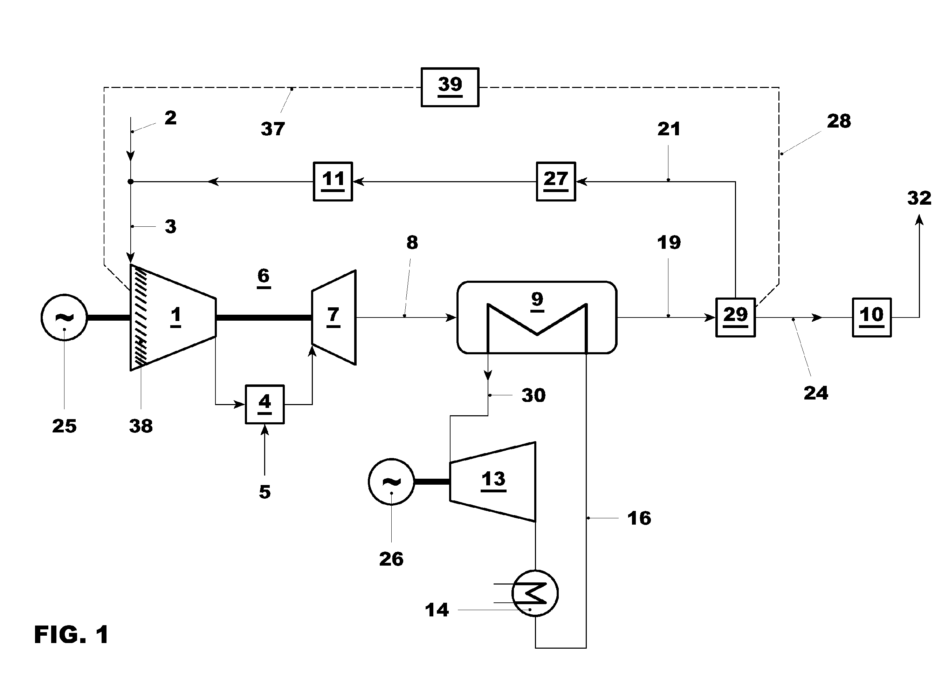

Fig. 1 zeigt in schematischer Darstellung die wesentlichen Elemente eines erfindungsgemässen Gasturbinenkraftwerks. Die Gasturbine 6 umfasst einen Verdichter 1 (Kompressor), die darin verdichtete Verbrennungsluft wird einer Brennkammer 4 zugeführt und dort mit Brennstoff 5 verbrannt. Anschliessend werden die heissen Verbrennungsgase in einer Turbine 7 entspannt. Die in der Turbine 7 erzeugte Nutzenergie wird dann zum Beispiel mit einem auf der gleichen Welle angeordneten ersten Generator 25 in elektrische Energie umgewandelt.

Die aus der Turbine 7 austretenden heissen Abgase 8 werden zur optimalen Nutzung der darin noch enthaltenen Energie in einem Abhitzedampferzeuger 9 (Heat recovery steam generator, HRSG) dazu verwendet, Frischdampf 30 für eine Dampfturbine 13 oder für andere Anlagen zu erzeugen. Die in der Dampfturbine 13 erzeugte Nutzenergie wird zum Beispiel mit einem auf der gleichen Welle angeordneten zweiten Generator 26 in elektrische Energie umgewandelt. Der Wasserdampfkreislauf ist in dem Beispiel vereinfacht und nur schematisch mit einem Kondensator 14 und Speisewasserleitung 16 dargestellt. Verschiedene Druckstufen, Speisewasserpumpen usw. werden nicht gezeigt, da diese nicht Gegenstand der Erfindung sind.

Die Abgase vom Abhitzedampferzeuger 19 werden stromab des Abhitzedampferzeugers 9 in einem Strömungsteiler 29 in einen ersten Abgasteilstrom 21 und einen zweiten Abgasteilstrom 24 geteilt. Der erste Abgasteilstrom 21 wird in die Ansaugleitung der Gasturbine 6 zurückgeführt und dort mit Umgebungsluft 2 vermischt. Der nicht zurückgeführte zweite Abgasteilstrom 24 wird über einen Kamin 32 an die Umgebung abgegeben. Um die Druckverluste der Abgasleitung zu überwinden und als weitere Regelmöglichkeit der Aufteilung der Abgasströme, kann optional ein Abgasgebläse 11 oder regelbares Abgasgebläse 11 vorgesehen sein.

Im Betrieb mit Rezirkulation wird der zurückgeführte Abgasstrom 21 in einem Abgasrückkühler 27, welcher mit Kondensator ausgestattet sein kann, auf etwas über Umgebungstemperatur abgekühlt. Stromab dieses Abgasrückkühlers 27 kann der Booster oder das Abgasgebläse 11 für den Rezirkulationsstrom 21 angeordnet sein. Der zurückgeführte Abgasstrom 21 wird mit der Umgebungsluft 2 vermischt, bevor das Gemisch als Ansaugstrom über den Verdichter- Eintritt 3 der Gasturbine 6 zugeführt wird.

In dem gezeigten Beispiel ist der Strömungsteiler 29 als Regelelement ausgeführt, das es erlaubt, den Rezirkulationsmassenstrom bzw. das Rezirkulationsverhältnis zu regeln. Die Position des Strömungsteilers 29 wird über eine Signalleitung 28 and den Regler 39 übertragen. Abhängig von der Position des Strömungsteilers 29 wird die Position der verstellbaren Verdichterleitschaufeln 38 geregelt, bzw. gegenüber einem Standardbetriebskonzept korrigiert. Der entsprechende Datenaustausch von Soll- und IstPosition der verstellbaren Verdichterleitschaufeln geschieht über die Signalleitung 37 (alle herkömmlichen Signalleitungen, Messwertaufnehmer und Regelelemente sind zur besseren Übersicht nicht dargestellt, da diese nicht Gegenstand der Erfindung sind).

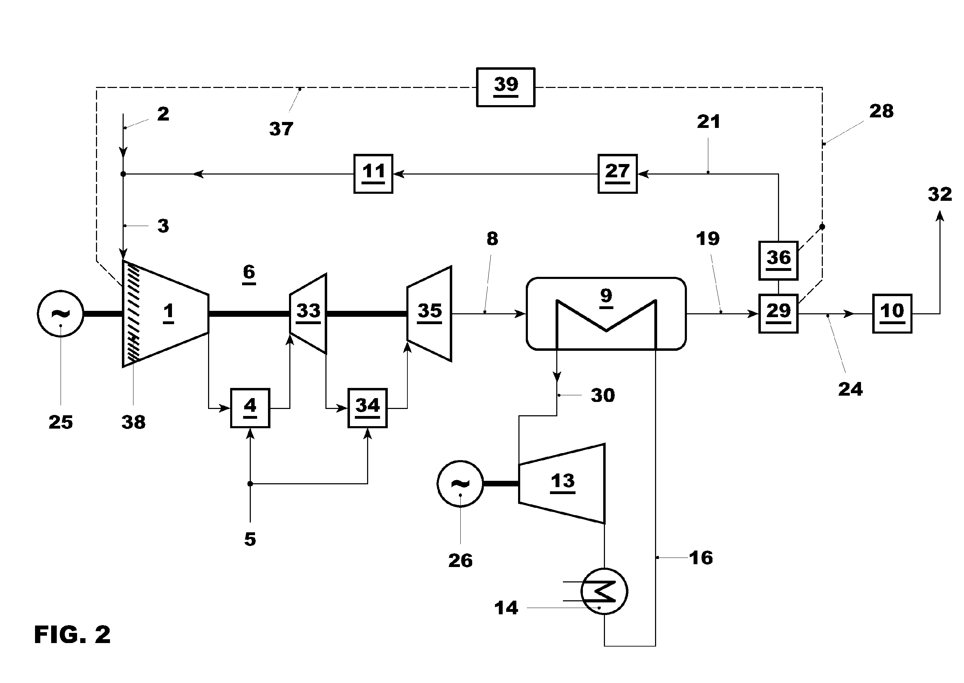

Das Beispiel in Fig. 1 zeigt eine Gasturbine 6 mit einfacher Brennkammer 4. Die Erfindung ist ohne Einschränkung auch für Gasturbinen mit sequentieller Verbrennung, wie sie beispielsweise aus der EP0718470 bekannt sind, anwendbar. In Fig. 2 ist schematisch ein Beispiel für ein Gasturbinenkraftwerk mit sequentieller Verbrennung und Abgasrezirkulation gezeigt. Bei dieser Gasturbine folgt der ersten Brennkammer 4 eine Hochdruckturbine 33. Den unter Arbeitsabgabe teilentspannten Austrittsgasen der Hochdruckturbine 33 wird in der zweiten Brennkammer 34 nochmals Brennstoff 5 zugeführt und verbrannt. Die heissen Verbrennungsgase der zweiten Brennkammer 34 werden in der Niederdruckturbine 35 unter Arbeitsabgabe weiter entspannt. Die Nutzung der Abwärme sowie Rezirkulation erfolgen analog dem Ausführungsbeispiel aus Fig. 1. Zur Regelung und Absperrung des Rezirkulationsstroms ist zusätzlich zu dem Abgasteiler 29, der unverstellbar ausgeführt sein kann, noch ein Regelelement 36 vorgesehen. Dies Regelelement 36 ist ebenfalls über Signalleitungen 28 mit dem Regler 29 verbunden.

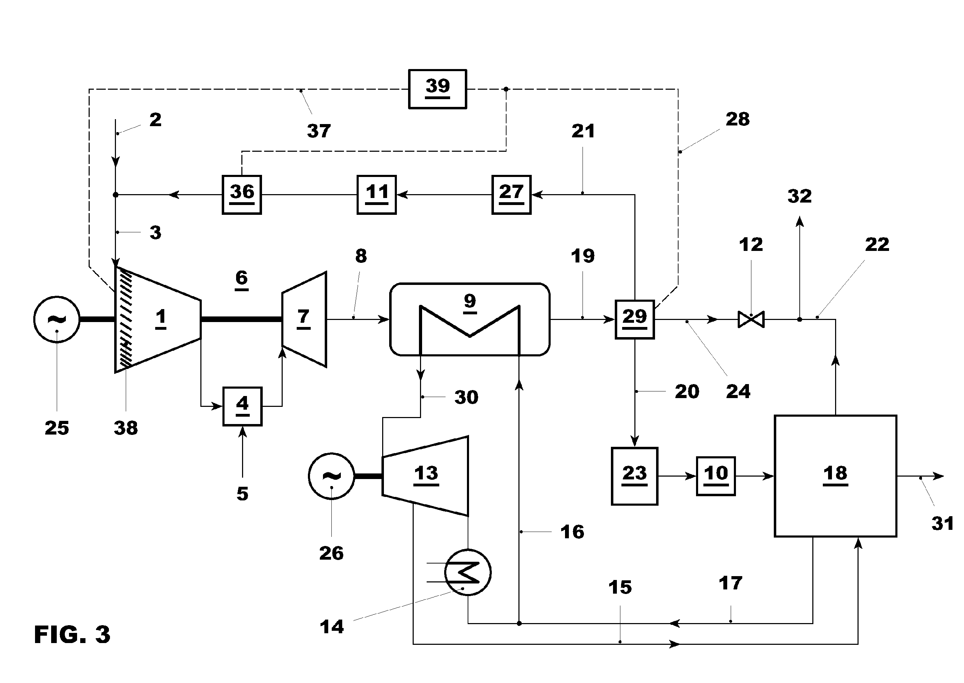

In der Fig. 3 ist basierend auf der Fig. 1 zusätzlich noch ein Kohlendioxid Abscheidsystem 18 dargestellt. Der nicht zurückgeführte zweite Abgasteilstrom 20 wird typischerweise in einem Abgasrückkühler 23 weiter gekühlt und dem Kohlendioxid Abscheidsystem 18 zugeführt. Von diesem werden Kohlendioxid- arme Abgase 22 über einen Kamin 32 an die Umgebung abgegeben. Um die Druckverluste des Kohlendioxid- Abscheidsystems 18 und der Abgasleitung zu überwinden, kann ein Abgasgebläse 10 vorgesehen sein. Das in dem Kohlendioxid- Abscheidsystem 18 abgeschiedene Kohlendioxid 31 wird typischerweise in einem Verdichter (nicht gezeigt) komprimiert und zur Lagerung oder weiteren Behandlung abgeleitet. Das Kohlendioxid- Abscheidsystem 18 ist über eine Dampfextraktion 15 mit Dampf, typischerweise Mittel- oder Niederdruckdampf, der aus der Dampfturbine 13 abgezweigt wird, versorgt. Der Dampf wird dem Wasserdampfkreislauf nach Energieabgabe im Kohlendioxid- Abscheidsystem 18 wieder zurückgeführt. In dem gezeigten Beispiel wird der Dampf kondensiert und über die Kondensatrückführleitung 17 dem Speisewasser zugeführt.

Der zweite Abgasteilstrom kann auch direkt über einen Abgasbypass 24, der eine Bypassklappe oder Ventil umfasst, zu dem Kamin 32 geführt werden.

Zusätzlich zu den in Fig. 1 gezeigtem Ausführungsbeispiel umfasst das Abgasrezirkulationssystem des in Fig. 3 gezeigten Beispiels noch ein separates Regelelement 36 zur Regelung des Rezirkulationsstroms.

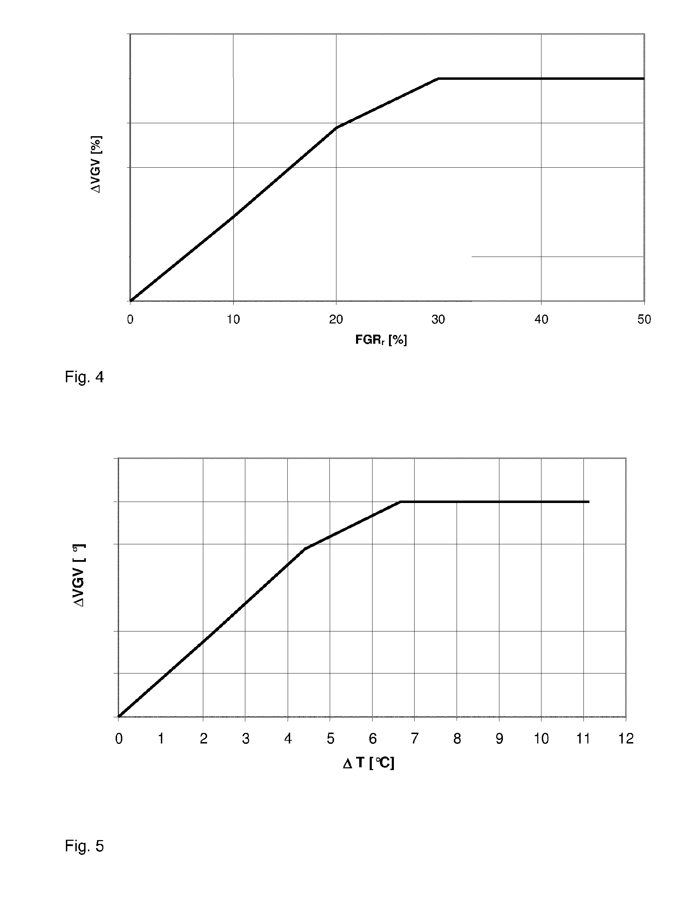

Die Fig. 4 zeigt für ein Ausführungsbeispiel schematisch eine Korrektur ΔVGV oder den Offset des Winkels der verstellbaren Verdichterleitschaufel VGV als Funktion der Abgasrezirkulationsrate FRGᵣ. Die Korrektur ist für eine kleine Abgasrezirkulationsrate FRGᵣ zunächst proportional zu der Abgasrezirkulationsrate FRGᵣ. Ab Erreichen eines Grenzwertes der Korrektur, der typischerweise zwischen 5° und 15° liegt, bleibt die Korrektur ΔVGV unabhängig von der Abgasrezirkulationsrate FRGᵣ konstant. Die Korrektur ΔVGV kann in einem Regler als Korrekturwert berechnet und separat als Korrektur ausgegeben werden oder in die Logik integriert werden, so dass direkt auf den korrigierten VGV-Wert geregelt wird.

Die Fig. 5 zeigt schematisch ein weiteres Ausführungsbeispiel für die Korrektur des Winkels der verstellbaren Verdichterleitschaufel ΔVGV. In diesem Beispiel ist die Korrektur ΔVGV abhängig von der durch Abgasrezirkulation gegenüber der Umgebungstemperatur erhöhten Verdichtereintrittstemperatur ΔT. Die Korrektur ΔVGV ist für kleine Temperaturänderungen ΔT zunächst proportional zu der Abgasrezirkulationsrate. Ab Erreichen eines Grenzwertes der Korrektur, der typischerweise zwischen 5° und 15° liegt, bleibt die Korrektur ΔVGV unabhängig von der Temperaturänderung ΔT konstant.

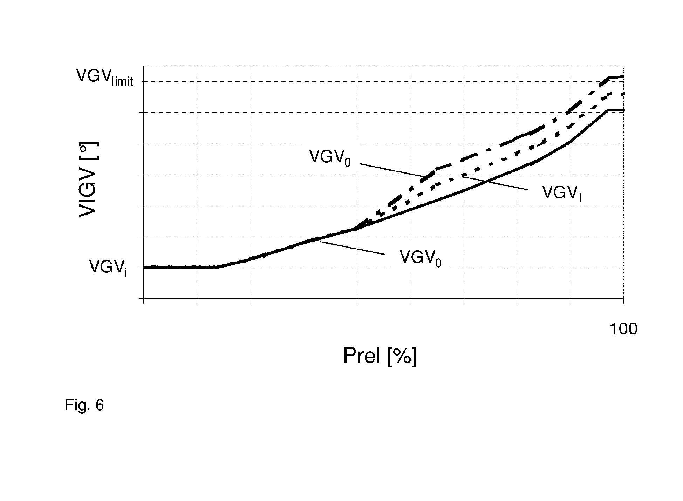

Die Fig. 6 zeigt schematisch einen Verlauf der Verdichterleitschaufelposition VGV über der relativen Last Pᵣₑₗ der Gasturbine 6. Die relative Last Pᵣₑₗ, ist die Leistung bei einem Betriebspunkt bezogen auf die mögliche Volllastleistung der Gasturbine 6 bei den selben Randbedingungen. Der Verlauf ist für drei mögliche Verfahren zum Betrieb der Gasturbine 6 gezeigt. In dem ersten Beispiel wird die Gasturbine 6 ohne Abgasrezirkulation betrieben. Die verstellbaren Verdichterleitschaufeln VGV₀ fahren nach einem Standardfahrkonzept ohne Abgasrezirkulation. In einem zweiten und dritten gezeigten Verfahren wird bei einem Lastpunkt, der in dem gezeigten Beispiel zwischen 40% und 60 relativer Last Pᵣₑₗ liegt, die Abgasrezirkulation gestartet und das Abgasrezirkulationsverhältnis mit der Last angehoben. Mit steigender Abgasrezirkulationsrate werden die verstellbaren Verdichtervorleitreihen VGV geöffnet.

In dem ersten Beispiel für Abgasrezirkulation werden die verstellbaren Verdichterleitschaufeln VGV proportional zum Abgasrezirkulationsverhältnis und damit proportional zur Last geöffnet. Sie werden proportional zur relativen Last geöffnet bis ein Winkel VGV_{I} der verstellbaren Verdichterleitschaufeln bei dem Abgasrezirkulationsverhältnis I erreicht ist.

In dem zweiten Beispiel für Abgasrezirkulation werden sie proportional zum Abgasrezirkulationsverhältnis und damit proportional zur Last geöffnet bis Winkel VGV_{II}, der verstellbaren Verdichterleitschaufeln bei einem Abgasrezirkulationsverhältnis II erreicht ist. Dies kann beispielsweise die maximale Korrektur der verstellbaren Verdichterleitreihen VGV für Abgasrezirkulation sein. In diesem Beispiel kann beispielsweise die Abgasrezirkulationsrate mit der Last noch weiter angehoben werden, ohne dass die verstellbaren Verdichterleitreihen VGV weiter korrigiert werden, da das Limit für die Korrektur der Verstellbaren Verdichterleitreihen erreicht ist. Es wird nach erreichen des Winkels VGV_{II} ohne weitere Änderung der Korrektur weiter bis Volllast aufgelastet.

Bei dem Auflasten der Gasturbine werden die verstellbaren Verdichterleitreihen VGV weiter geöffnet bis bei hoher Last ein Limitwert VIGV_{Limit} erreicht wird, der die maximale Öffnung der verstellbaren Verdichterleitreihen VGV begrenzt.

### BEZUGSZEICHENLISTE

- 1: Verdichter
- 2: Umgebungsluft
- 3: Verdichter-Eintritt
- 4: Brennkammer, erste Brennkammer
- 5: Brennstoff
- 6: Gasturbine
- 7: Turbine
- 8: Heisse Abgase der Gasturbine
- 9: Abhitzedampferzeuger (heat recovery steam generator, HRSG)
- 10: Abgasgebläse für den zweiten partiellen Abgasstrom (zum Kohlendioxid-Abscheide- System oder Kamin)
- 11: Abgasgebläse für den ersten Abgasteilstrom (Abgasrezirkulation)
- 12: Bypassklappe oder Ventil
- 13: Dampfturbine
- 14: Kondensator
- 15: Dampfextraktion für das Kohlendioxid- Abscheidsystem
- 16: Speisewasserleitung
- 17: Kondensat Rückführleitung
- 18: Kohlendioxid- Abscheidsystem
- 19: Abgas vom Abhitzedampferzeuger
- 20: Zweiter Abgasteilstrom (Abgasleitung zum Kohlendioxid- Abscheidsystem)
- 21: Erster Abgasteilstrom (Abgasrezirkulation)
- 22: Kohlendioxidarmes Abgas
- 23: Abgasrückkühler (für den zweiten Abgasteilstrom)
- 24: Abgasbypass zum Kamin
- 25: Erster Generator
- 26: Zweiter Generator
- 27: Abgasrückkühler (für den ersten Abgasteilstrom)
- 28: Signalleitung zu dem Regelelement (29, 36)
- 29: Abgasteiler
- 30: Frischdampf
- 31: Abgeschiedenes Kohlendioxid
- 32: Kamin
- 33: Hochdruckturbine
- 34: zweite Brennkammer
- 35: Niederdruckturbine
- 36: Regelelement
- 37: Signalleitung zur verstellbaren Verdichterleitschaufel
- 38: verstellbaren Verdichterleitschaufeln (VGV)
- 39: Regler

- VGV: Winkel der verstellbaren Verdichterleitschaufeln
- VGVᵢ: Winkel der verstellbaren Verdichterleitschaufeln bei Leerlauf (idle)
- VGVₗᵢₘᵢₜ: Limitwert zum maximalen öffnen der verstellbaren Verdichterleitschaufel
- VGV₀: Winkel der verstellbaren Verdichterleitschaufeln ohne Abgasrezirkulation
- VGV_{I}: Winkel der verstellbaren Verdichterleitschaufeln mit Abgasrezirkulationsverhältnis I
- VGV_{II}: Winkel der verstellbaren Verdichterleitschaufeln mit Abgasrezirkulationsverhältnis II
- ΔVGV: Änderung des Winkels der verstellbaren Verdichterleitschaufel gegenüber dem Betrieb ohne Abgasrezirkulation
- ΔT: Erwärmung der Verdichtereintrittstemperatur gegenüber der Umgebungstemperatur

## Patentansprüche

1. Verfahren zum Betrieb eines Gasturbinenkraftwerkes mit Abgasrezirkulation, welches eine Gasturbine (6), einen Abhitzedampferzeuger (9) und einen Abgasteiler (29), der die Abgase (19) des Gasturbinenkraftwerkes in einen ersten Abgasstrom (21) zur Rezirkulation in einen Ansaugstrom der Gasturbine (6) und in einen zweiten Abgasstrom (24) zur Abgabe an die Umgebung teilt, sowie ein Regelelement (11, 29) zur Regelung des ersten Abgasstroms (21) und einen Abgasrückkühler (27) umfasst,
wobei die Gasturbine (6) einen Verdichter (1) mit verstellbaren Verdichterleitschaufeln (38), eine Brennkammer (4, 34) und eine Turbine (7, 33, 35) beinhaltet,
**dadurch gekennzeichnet, dass** die verstellbaren Verdichterleitschaufeln (38) in Abhängigkeit von dem Abgasrezirkulationsverhältnis und/oder einem für die Abgasrezirkulation indikativen Prozessparameter geregelt werden.

2. Verfahren nach Anspruch 1, **dadurch gekennzeichnet, dass** die verstellbaren Verdichterleitschaufeln (38) in Abhängigkeit von der Temperaturdifferenz zwischen Verdichtereintrittstemperatur und Umgebungstemperatur geregelt werden.

3. Verfahren nach Anspruch 1 oder 2, **dadurch gekennzeichnet, dass** die verstellbaren Verdichterleitschaufeln (38) in Abhängigkeit von der Rückkühltemperatur des Abgasrückkühlers (27) geregelt werden.

4. Verfahren nach einem der Ansprüche 1 bis 3, **dadurch gekennzeichnet, dass** die verstellbaren Verdichterleitschaufeln (38) in Abhängigkeit von der Stellung des Regelelementes (29, 36) zur Regelung des ersten Abgasteilstroms (21) geregelt werden.

5. Verfahren nach einem der Ansprüche 1 bis 4, **dadurch gekennzeichnet, dass** die verstellbaren Verdichterleitschaufeln (38) in proportional zum Abgasrezirkulationsverhältnis und/oder einem für die Abgasrezirkulation indikativen Prozessparameter geöffnet werden.

6. Verfahren nach Anspruch 1, **dadurch gekennzeichnet, dass** die verstellbaren Verdichterleitschaufeln (38) in Abhängigkeit von der Abgastemperatur der Turbine (7, 35) so geregelt wird, dass die Abgastemperatur bei einer Änderung des Rezirkulationsverhältnisses konstant gehalten wird.

7. Verfahren nach einem der Ansprüche 1 bis 6, **dadurch gekennzeichnet, dass** die verstellbaren Verdichterleitschaufeln (38) mit wachsendem Abgasrezirkulationsverhältnis und/oder in Abhängigkeit von einem für die Abgasrezirkulation indikativen Prozessparameter geöffnet werden, bis ein Grenzwert in dem Offset der Leitreihenposition erreicht ist.

8. Verfahren nach einem der Ansprüche 1 bis 7, **dadurch gekennzeichnet, dass** die Volllastposition der verstellbaren Verdichterleitschaufeln (38) in Abhängigkeit von dem Abgasrezirkulationsverhältnis und/ oder einem für die Abgasrezirkulation indikativen Prozessparameter geregelt wird.

9. Verfahren nach einem der Ansprüche 1 bis 8, **dadurch gekennzeichnet, dass** die verstellbaren Verdichterleitschaufeln (38) in Abhängigkeit von dem Abgasrezirkulationsverhältnis und/oder einem für die Abgasrezirkulation indikativen Prozessparameter geöffnet werden, bis ein Limitwert der verstellbaren Verdichterleitschaufelposition erreicht ist.

10. Verfahren nach Anspruch 9, **dadurch gekennzeichnet, dass** die der Limitwert der Öffnung der verstellbaren Verdichterleitschaufeln (38) von der Betriebsfrequenz und/oder der aerodynamischen Drehzahl des Verdichters (1) abhängig ist.

11. Verfahren zum Betrieb eines Gasturbinenkraftwerkes mit Abgasrezirkulation nach einem der Ansprüche 1 bis 10, **dadurch gekennzeichnet, dass** die Gasturbine (6) eine erste (4) und eine zweite Brennkammer (34) umfasst, und dass beim Start der Gasturbine (6) zunächst die erste Brennkammer (4) mit Brennstoff (5) versorgt wird und die Abgasrezirkulation erst nach einem Zuschalten der zweiten Brennkammer (34) initiiert wird und vor einem Abschalten der zweiten Brennkammer (34) abgeschaltet wird.

12. Verfahren zum Betrieb eines Gasturbinenkraftwerkes mit Abgasrezirkulation nach einem der Ansprüche 1 bis 11, **dadurch gekennzeichnet, dass** der zweite Abgasstrom (24) einem Kohlendioxid- Abscheidsystem (18) zugeführt wird, abgeschiedenes Kohlendioxid (31) zur weiteren Verarbeitung oder Lagerung abgeführt wird und kohlendioxidarmes Abgas (22) an die Umgebung abgeführt wird.

13. Gasturbinenkraftwerk mit Abgasrezirkulation, welches eine Gasturbine (6) mit einem Verdichter (1), verstellbaren Verdichterleitschaufeln (38), einer Brennkammer (4, 34), einer Turbine (7, 33, 35), einem Regler, sowie einen Abhitzedampferzeuger (9) und einen Abgasteiler (29), der die Abgase (19) in einen ersten Abgasstrom (21) zur Rezirkulation in einen Ansaugstrom der Gasturbine (6) und in einen zweiten Abgasstrom (24) zur Abgabe an die Umgebung teilt, sowie ein Regelelement (29, 36) zur Regelung des ersten Abgasstroms (21) umfasst, **dadurch gekennzeichnet,**
**dass** der Regler so konfiguriert ist, dass eine Soll- Position der verstellbaren Verdichterleitschaufeln (33) in Abhängigkeit von der Stellung des Regelelements (29, 36) geregelt wird.
